# EUROPEAN PATENT SPECIFICATION

(11) **EP 4 260 927 B1**
(45) Date of publication and mention of the grant of the patent: **23.07.2025**
(21) Application number: 22167612.5
(22) Date of filing: 11.04.2022
(51) Int. Cl.: B01D 25/12, B01D 25/21

(54) **A FILTER GRID RECEIVABLE WITHIN A FILTRATE VAT OF A FILTER PRESS**
IN EINER FILTRATWANNE EINER FILTERPRESSE AUFNEHMBARES FILTERGITTER
GRILLE DE FILTRE POUVANT ÊTRE REÇUE DANS UNE CUVE DE FILTRAT D'UN FILTRE-PRESSE

(43) Date of publication of application: 18.10.2023
(73) Proprietor: Metso Finland Oy, 02230 Espoo (FI)
(72) Inventor: MUSTAKANGAS, Mirva, 33950 Pirkkala (FI); KAIPAINEN, Janne, 69510 Halsua (FI); JUVONEN, Ismo, 55300 Rauha (FI); ELORANTA, Teemu, 54530 Luumäki (FI)
(74) Representative: Boco IP Oy Ab

(56) References cited:
- EP-A1- 0 070 671
- WO-A1-2019/087021
- WO-A1-2020/152525
- WO-A1-2020/206437
- US-A- 6 000 558

## Description

### FIELD OF THE DISCLOSURE

The present disclosure relates to filter presses, and more particularly to filter grids used for supporting a filter medium form a distance of a filtrate vat. The present disclosure further concerns a filtrate vat assembly, a filter plate assembly and a filter press equipped with such a filter grid.

### BACKGROUND OF THE DISCLOSURE

Filter grids are used in filter presses, where a filter chamber is formed between adjacent filter plates such that a filter medium is disposed between said plates. Slurry is fed into the filter chamber, and liquid filtrate is allowed to flow through the filter element into a filtrate vat formed on a side of the filter element opposing the filter chamber. To prevent the filter element from deforming into the filtrate vat and blocking filtrate flow therein, a filter grid is often provided within said filtrate vat. Typically, such a filtrate grid is a perforated plate having a planar surface for supporting the filter element on one side and a plurality of protrusion on an opposing side. Such protrusions support the remaining grid at a distance from a bottom of the filtrate vat, thereby allowing filtrate to flow between the filtrate grid itself and the bottom of the filtrate vat.

Generally speaking, it is desirable that the apertures of the grid are of relatively small size, as this provides better support for the filter element. That is, too large apertures lead to insufficient support for the filter element and excessive wear of the filter element due to the tendency of the filter element to deform into such apertures when filtration pressures are exerted thereon. At the same time, a grid should have a sufficiently large open area (i.e., are occupied by apertures) for allowing a sufficient filtrate flow therethrough. Typically, this has been addressed by providing a sufficiently large number of apertures.

Another consideration is the mechanical strength of the grid, which should be sufficient enough to withstand repetitive compression cycles without excessive permanent deformation.

Conventional grids leave room for improvement with regards to achieving a satisfactory balance between the filtrate flow, filter element support and mechanical strength. For example, document EP 0 070 671 A discloses a masking apparatus and methods for bulk charging a flowable material into selected cells of a honeycomb structure, document WO 2019/087021 A discloses a filter plate configured to receive at least one grid, document US 6 000 558 A discloses a filter element comprising at least one filtration layer and two spacer layers and document WO 2020/152525 A discloses a modular filter element frame and a filter element frame assembly.

### BRIEF DESCRIPTION OF THE DISCLOSURE

An object of the present disclosure is to provide a filter grid with improved filtrate flow properties while simultaneously providing sufficient support for a filter element. It is a further object of the present disclosure to provide a filtrate vat assembly, a filter plate assembly and a filter press incorporating such a filter grid.

The object of the disclosure is achieved by a filter grid, filtrate vat assembly, filter plate assembly and a filter press, which are characterized by what is stated in the independent claims. The preferred embodiments of the disclosure are disclosed in the dependent claims.

The disclosure is based on the realization that, in addition to an area occupied by apertures relative to the total area of a grid (i.e., an open area percentage of a grid), also the area of a single aperture plays a critical role on the filtrate flow capabilities of a grid.

That is, although a relatively smaller aperture size provides better support for the filter element, and the number of such relatively apertures can be large enough to achieve a comparatively large open area percentage of the grid, the relatively smaller aperture size results in decreased flow capabilities of a grid.

This is believed to be the result of a greater perimeter with respect to aperture size exhibited by relatively small apertures as compared to apertures of a relatively larger area. The perimeter of the aperture causes flow resistance of filtrate flow through said aperture, and consequently, the flow resistance is comparatively smaller for apertures having a relatively large aperture area.

Consequently, the objects of the disclosure are achieved with a filter grid having a plurality of apertures for allowing filtrate to flow through the grid, such that the area occupied by said plurality of apertures is sufficiently large as compared to the total area of the grid supporting the filter element, while each of the plurality of apertures has a sufficiently large ratio of their aperture area to their aperture circumference, as discussed in more detail hereafter.

An advantage of the disclosure is that a filter grid with improved flow characteristics is achieved while simultaneously maintaining sufficient support for the filter element.

According to a first aspect of the present disclosure, a filter grid receivable within a filtrate vat of a filter press is provided. The filter grid comprises a plate -like grid body having a first side and an opposing second side.

The first side defines a generally planar first surface for supporting a filter element (such as a filter cloth), when in use. The second side comprises a plurality of protruding knobs spaced apart from each other for supporting the remaining grid on an associated filtrate vat at a distance therefrom. The grid body further comprises a plurality of apertures extending between the first side and the second side, thereby providing fluid communication between the first side and the second side through the grid body.

The plurality of apertures allow filtrate, received through a filter element supported by the filter grid, to flow through the filter grid onto the filtrate vat, while the protruding knobs allow for a flow route for said filtrate between the filter grid and the filtrate vat.

Particularly, each of the plurality of apertures define an aperture area and an aperture circumference, such that a ratio of the aperture area in millimetres squared to the aperture circumference in millimetres is above 1.3. This ensures that individual apertures are dimensioned in a way that the flow resistance caused by the friction between the perimeter of such an aperture and the flowing filtrate does not excessively restrict the filtrate flow in typical filtration applications.

Moreover, the plurality of apertures occupy at least 35% of a total area of the first side. This, in turn, ensures that the amount of the apertures is sufficient to allow a sufficient filtrate flow over the grid as whole in typical filtration applications.

Advantageously, the ratio of the aperture area in millimetres squared to the aperture circumference in millimetres is above 1.4, more preferably above 1.5, and most preferably above 1.6.

Advantageously, the plurality of apertures occupy at least 36% of the total area of the first side, and more preferably at least 37% of the total area of the first side.

Advantageously, each of the plurality of apertures have an aperture area of no more than 40 millimetres squared, more preferably no more than 39 millimetres squared, and most preferably no more than 38 millimetres squared. Such aperture areas have been found to provide sufficient support for a filter element laid on the filter grid in typical filtration applications. For example, an aperture area of 37 millimetres squared has been considered advantageous, while even an aperture area as low as 27 millimetres squared has been considered suitable. Suitably, the aperture area is defined at a level of the first surface.

In an embodiment according to the first aspect of the present invention, each of the plurality of apertures are of a hexagonal shape, most suitably a regular hexagonal shape. In the context of this disclosure, a shape of an aperture refers to the cross-sectional shape thereof, unless otherwise stated. Such a hexagonal shape has been found to provide a particularly advantageous ratio of aperture area to aperture circumference for a given aperture size, while maintaining a sufficiently rigid mechanical structure of the filter grid.

Preferably, but not necessarily, the plurality of apertures are arranged on the first surface in a honeycomb layout. That is, the plurality of apertures comprises a plurality of first rows and a plurality of second rows, both extending in a longitudinal direction. Most suitably, the apertures in a same row are equally spaced apart from each other. The first rows are suitably spaced apart from the second rows in a direction transverse to their longitudinal direction. Moreover, the first rows are arranged parallel, and in a mutually alternating manner with respect to said second rows. In other words, the first rows and the second rows alternate between each other in a direction transverse to the longitudinal directions of said rows. Furthermore, the apertures in said first rows are staggered with respect to the apertures in said second rows in the longitudinal direction of said first and second rows. That is, the longitudinal positions of the apertures in the first rows are different from those of the apertures in the second rows.

Such a layout allows for the provision of an increased number of apertures, while enabling sufficient rigidness of the grid body to be maintained.

Preferably, but not necessarily, the apertures in the first rows overlap with those in the second rows in a direction transverse to the longitudinal direction of the first and second rows.

Such a layout allows for the provision of a further increased number of apertures, while enabling sufficient rigidness of the grid body to be maintained.

More preferably, but not necessarily, the apertures in the first rows are additionally spaced apart from those in the second rows in the longitudinal direction of the first and second rows.

Such a layout additionally allows for the provision of an increased number of apertures, while enabling increased rigidness of the grid body to be maintained.

Preferably, but not necessarily, each of the plurality of apertures have an inscribed diameter of at least 5 mm, and more preferably each of the plurality of apertures have an inscribed diameter of at least 6 mm. For an aperture of a hexagonal shape, the inscribed diameter corresponds to a distance between parallel, opposing sides of the hexagon. Such diameters have been found to provide suitable flow characteristics for typical filtration applications. For example, inscribed diameters of 6,5 mm or 5,6 mm have been considered particularly advantageous.

Preferably, but not necessarily, a minimum distance between adjacent apertures is between 2 - 6 mm, more preferably between 3 - 5 mm, and most preferably between 3.5 - 4.5 mm. Such dimensions have been found to allow a sufficient material strength between adjacent apertures for providing required mechanical rigidness of the grid body suitable for typical filtration applications. For example, a distance of 3 mm or 4 mm have been considered particularly advantageous. For regular hexagonal apertures, the minimum distance corresponds to a distance between opposing, parallel sides of adjacent apertures.

Moreover, the apertures may be tapered such that their aperture areas diminish towards the second side. Alternatively, the apertures may be tapered such that their aperture areas increase towards the second side. Should the apertures be tapered, the aperture areas at opposing ends of said apertures suitably differ by no more than 5%. Furthermore, edges between the apertures and the first side may be rounded or chamfered. Naturally, such rounding may alternatively or in addition be provided on edges between the apertures and the second side.

In an embodiment according to the first aspect of the present invention, non-peripheral knobs of the plurality of protruding knobs are provided on the second side between three apertures immediately adjacent to each other. In the context of this disclosure, the term non-peripheral knob is used to describe knobs which do not reside outermost in a pattern formed by the plurality of knobs on the grid they are provided on.

Providing the non-peripheral knobs in areas of the second surface residing between three apertures adjacent to each other has been found to provide sufficient rigidness for the grid required for typical filtration applications without interfering with the filtrate flow through said apertures.

Preferably, but not necessarily, such three apertures are circumferentially equally spaced apart from each other about a knob surrounded by said three apertures. This allows for a maximum size of the knob to be fitted in the area between the apertures adjacent to the knob

Preferably, but not necessarily, projections of such non-peripheral knobs on the second side coincide with those of apertures adjacent to such non-peripheral knobs. In other words, the projections of such non-peripheral knobs on the second side may be inscribed within the projections of apertures adjacent to said knob, and suitably, each other. Alternatively, projections of such non-peripheral knobs on the second side may even overlap with those of apertures adjacent to such non-peripheral knobs. In other words, the projections of such non-peripheral knobs on the second side may extend into the projections of apertures adjacent to said knob.

In an embodiment according to the first aspect of the present invention, the protruding knobs have a circular cross-sectional profile. Preferably, such circular knobs have a maximum cross-sectional diameter between 3 - 7 mm, more preferably between 4 - 6 mm, and most preferably between 4,5 - 5,5 mm. Suitably, the protruding knobs may be provided with a tapered shape, such that their diameter increases towards the second side of the grid body.

It is noted that the first aspect of the present disclosure encompasses any combination of two or more embodiments, or variants thereof, as discussed above.

According to a second aspect of the present disclosure, a filtrate vat assembly is provided.

Such a vat assembly comprises a vat body, in turn, comprising a filtrate side defining a receptacle, thereby forming a filtrate vat for receiving filtrate. The vat body further comprises a plate side configured for being supported on a filter plate. Moreover, the filtrate side and the plate side reside on opposite sides of the vat body.

Particularly, the vat assembly comprises a filter grid according to the first aspect of the present disclosure received within said filtrate vat.

According to a third aspect of the present disclosure, a filter plate assembly is provided.

Such a filter plate assembly comprises a filter plate, in turn, comprising a vat side with a filtrate vat arranged thereon. The filtrate vat is configured for receiving filtrate. The filter plate further comprises a chamber side forming at least a portion of a filter chamber. The filter chamber may also be delimited by two adjacent filter plates.

Particularly, the filter plate assembly further comprises a filter grid according to the first aspect of the present disclosure received within the filtrate vat.

Preferably, but not necessarily, the filter plate assembly further comprises a filtrate vat assembly according the second aspect of the present disclosure arranged on the vat side of the filter plate.

According to a fourth aspect of the present disclosure, a filter press is provided. Such a filter press comprises a plurality of filter plates, arranged such that at least a filter chamber is formed between adjacent filter plates.

The filter press further comprises a filter medium (such as a filter cloth) disposed between said adjacent filter plates. The filter medium is arranged such that said filter chamber is delimited in part by the filter medium for separating a slurry to be filtered into a solids cake and liquid filtrate.

The filter press further comprises a filtrate vat for receiving filtrate. The filtrate vat is arranged on a side of the filter element opposite to the filter chamber. Particularly, the filtrate vat is arranged to receive, when in use, liquid filtrate separated by the filter element. from a slurry fed into the filter chamber.

Particularly, the filter press further comprises a filter grid according to the first aspect of the present disclosure received within the filtrate vat, so as to support the filter element thereon.

Preferably, but not necessarily, the filter press may further comprise a filtrate vat assembly according the second aspect of the present disclosure.

Preferably, but not necessarily, the filter press may further comprise a filter plate assembly according the third aspect of the present disclosure.,

### BRIEF DESCRIPTION OF THE DRAWINGS

In the following the disclosure will be described in greater detail by means of preferred embodiments with reference to the accompanying drawings, in which:
Fig. 1 schematically depicts a cross-sectional illustration a filter grid according to an embodiment of the present disclosure, as seen from a lateral side;
Fig. 2 schematically depicts a detail view of filter grid according to an embodiment of the present disclosure as seen from a first side thereof;
Fig. 3 schematically depicts a cross-sectional illustration a filtrate vat assembly according to an embodiment of the present disclosure, as seen from a lateral side;
Fig. 4 schematically depicts a cross-sectional illustration a filter plate assembly according to an embodiment of the present disclosure, as seen from a lateral side, and
Fig. 5 schematically depicts a cross-sectional illustration a filter press according to an embodiment of the present disclosure, as seen from a lateral side.

### DETAILED DESCRIPTION OF THE DISCLOSURE

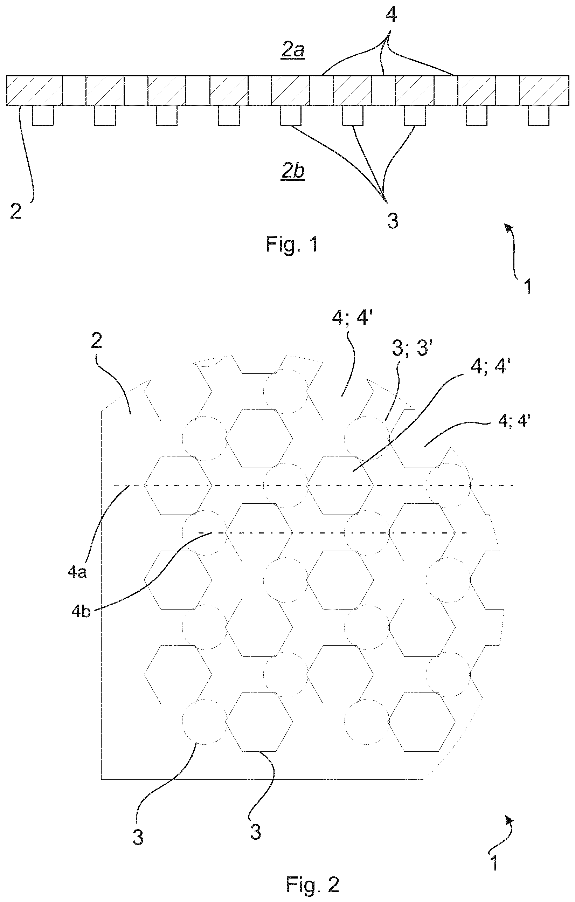

Fig. 1 schematically depicts a cross-sectional illustration a filter grid 1 according to an embodiment of the present disclosure, as seen from a lateral side. The filter grid 1 comprises a plate-like grid body 2 having a first side 2a and an opposing second side 2b.

The first side 2a is generally planar, while protruding knobs 3 extend from the second side 2b. A plurality of apertures 4 extend between the first side 2a and the second side 2b thereby providing a flow route for filtrate to pass through the grid body 2.

Fig. 2 schematically depicts a detail view of filter grid 1 according to an embodiment of the present disclosure as seen from a first side 2a thereof. The grid body 2 has a plurality of apertures 4 extending between the first side 2a and the second side 2b thereof.

The apertures 4 are of a regular hexagonal shape arranged in a staggered, honeycomb layout. In the arrangement of Fig. 2, the apertures 2 are arranged in first rows 4a, and second rows 4b which are parallel with each other, and both of which have multiple apertures 4 spaced apart along a longitudinal direction of said rows. In the arrangement of Fig. 2 the apertures 4 in the same row are equally spaced apart from each other. The first rows 4a are spaced apart from the second rows 4b. Moreover, the first rows 4a and second rows 4b are arranged in a mutually alternating manner. That is, in a direction transverse to the longitudinal direction of said rows 4a, 4b, a first row 4a is followed by a second row 4b, which is then again follow by a first row 4a, and so forth.

The apertures the first rows 4a are staggered in the longitudinal direction of said first and second rows 4a, 4b with respect to the apertures in said second rows 4b. The longitudinal positions of apertures 4 in the first rows 4a, on the other hand, are aligned with those of in the following first rows 4a. In a similar manner, the longitudinal positions of apertures 4 in the second rows 4b, are aligned with those of in the following second rows 4b.

In the arrangement of Fig. 2 the apertures 4 in the first rows 4a overlap with those in the second rows 4b in a direction transverse to the longitudinal direction of the first and second rows 4a, 4b. In other words, the apertures 4 in the second rows 4b partially reside within an area between longitudinally successive apertures 4 in an adjacent first row, and vice versa.

Moreover, the apertures 4 in the first rows 4a do not overlap with those in the second rows 4b in the longitudinal direction of the first and second rows 4a, 4b. In other words, the apertures 4 in the second rows 4b do not reside within an area between transversally adjacent apertures 4 of first rows surrounding said second row 4b, and vice versa.

The knobs 3 protruding from the second side 2b of the grid body 2 are not visible from the first side 2a of the grid body 2, but their position with respect to the apertures is depicted with dash-lined circles. The knobs 3 are provided on the second side 2b at areas residing between adjacent apertures 4. More particularly, non-peripheral knobs 3' (i.e., ones which are not located on the outer periphery of the pattern formed by the knobs 3) are located between three apertures 4', which are immediately adjacent to each other. It should be noted that not all spaces delimited by three adjacent apertures 4' need to be provided with a knob 3'. Such apertures 4' delimiting non-peripheral knobs 3' are circumferentially equally spaced apart from each other about the respective knob 3'. Moreover, the projections of such non-peripheral knobs 3' on the second side 2b coincide with those of apertures 4' adjacent to such non-peripheral knobs 3'. That is, on the second side 2b, the non-peripheral knobs 3' extend up to the adjacent apertures 4', and may even slightly overlap with each other.

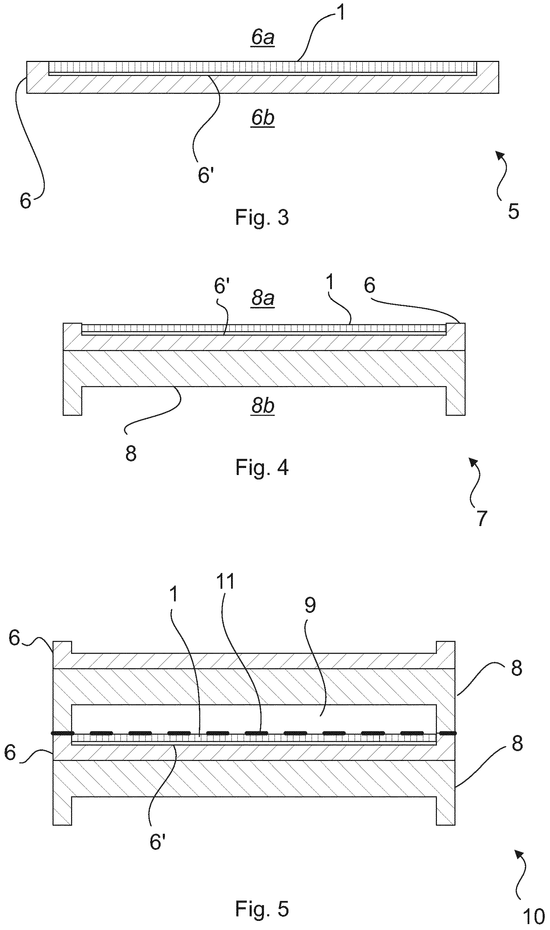

Fig. 3 schematically depicts a cross-sectional illustration a filtrate vat assembly 5 according to an embodiment of the present disclosure, as seen from a lateral side. The vat assembly 5 comprises a vat body 6 having a filtrate side 6a and a plate side 6b. The filtrate side 6a defines a receptacle forming a filtrate vat 6'. In the embodiment of Fig. 3 the filtrate vat 6' is formed by a central recessed area of the filtrate side 6a surrounded by a border elevated with respect to the recessed area. The plate side 6b of the vat body 6, in turn, is intended to be supported by a filter plate, when in use. In the arrangement of Fig. 3 the plate side 6b of the vat body 6 is planar. Moreover, the filtrate vat assembly 5 further comprises a filter grid 1, received within the filtrate vat 6' Although not illustrated in the appended drawings, the vat body 6 may naturally comprise drainage channels for conducting filtrate from the vat 6' to be further received elsewhere.

Fig. 4 schematically depicts a cross-sectional illustration a filter plate assembly 7 according to an embodiment of the present disclosure, as seen from a lateral side. The filter plate assembly 7 comprises a filter plate 8 having a vat side 8a with a filtrate vat 6' arranged thereon. In the arrangement of Fig. 4, the filtrate vat 6' is provided essentially as the filtrate vat assembly 5 of Fig. 3, although the filtrate vat 6' could alternatively be provided otherwise, e.g., as an integral part of the filter plate 8.

Moreover, the filter plate assembly 7 further comprises a filter grid 1 received within the filtrate vat 6'. On a side opposite to the vat side 8a, the filter plate 8 defines a chamber side 8, which is arranged to delimit at least a portion of a filter chamber 9, when in use. In the arrangement of Fig. 4, this is caried out by providing a recessed are on the chamber side 8b. Although not illustrated in Fig. 4, the filter plate may naturally comprise feed channels for introducing slurry into the filter chamber 9.

Fig. 5 schematically depicts a cross-sectional illustration a filter press 10 according to an embodiment of the present disclosure, as seen from a lateral side. Particularly, the filter press 10 comprises adjacent filter plates 10 placed on above the other. In the arrangement of Fig. 5, the filter plates 8 are provided essentially as filter plate assemblies 7 of Fig. 4.

Although only two filter plates 8 are depicted in Fig. 5, it should be understood that a greater number of filter plates 8 may be provided on the filter press.

A filter element 11 (e.g., a filter cloth) is arranged between the adjacent filter plates 8, such that a filter chamber 9 is delimited between the filter element 11 and the filter plate 8 having the chamber side 8b thereof facing the filter element 11. Moreover, the filter plate 8 having the vat side 8a thereof facing the filter element 11 has a grid 1 received within the filtrate vat 6', such that the filter element 11 is supported on the filter grid 1.

In use, slurry is fed into the filter chamber 9 under pressure, so that a liquid component of the slurry (i.e., filtrate) passes through the filter element 11 and is received in to filtrate vat 6', from where it is further conducted elsewhere. The grid 1 supports the filter element 11, thereby preventing it from being deflected into the filtrate vat 6', which could both damage the filter element 11 and prevent filtrate flow into the filtrate vat 6'. The apertures 4 of the grid 1 allow the filtrate to through the grid 1 into the filtrate vat 6', while the knobs of the grid allow the filtrate to flow within the vat 6' under the grid.

According to a first specific embodiment of the disclosure, a grid 1 with a similar geometry to that depicted in Fig. 2 may be provided with each aperture 4 having a regular hexagonal cross-sectional shape with an inscribed diameter of 6,5 mm. The plurality of apertures 4 are arranged in a honeycomb layout to fill the first side 2a of grid 1, such that a distance between parallel sides of adjacent apertures is 4 mm. This results in the plurality of apertures 4, occupying 37.5 % of the area of the first side 2a of the grid, each aperture having an area of 36,6 millimetres squared. This arrangement achieves a ratio of the aperture area in millimetres squared to the aperture circumference in millimetres of 1.63 and allowing a maximum diameter for the knobs of 5 mm.

According to a second specific embodiment of the disclosure, a grid 1 similar to that of the first specific embodiment 2 may be provided with the exception of the distance between parallel sides of adjacent apertures being 3 mm. This results in the plurality of apertures 4 occupying 45.9 % of the area of the first side 2a of the grid, each having an aperture are of 36,6 millimetres squared. This arrangement achieves a ratio of the aperture area in millimetres squared to the aperture circumference in millimetres of 1,63 and allowing a maximum diameter for the knobs of 4 mm.

According to a third specific embodiment of the disclosure, a grid 1 with a similar geometry to that depicted in Fig. 2 may be provided with each aperture 4 having a regular hexagonal cross-sectional shape with an inscribed diameter of 5,6 mm. The plurality of apertures 4 are arranged in a honeycomb layout to fill the first side 2a of grid 1, such that a distance between parallel sides of adjacent apertures is 3 mm. This results in the plurality of apertures 4 occupying 41,25 % of the area of the first side 2a of the grid, each having an aperture are of 27,2 millimetres squared. This arrangement achieves a ratio of the aperture area in millimetres squared to the aperture circumference in millimetres of 1.4 and allowing a maximum diameter for the knobs of 3,5 mm.

### LIST OF REFERENCE NUMERALS

- 1: filter grid
- 2: grid body
- 2a: first side of grid body
- 2b: second side of grid body
- 3: protruding knobs
- 3': non peripheral knob
- 4: apertures
- 4': aperture surrounding non-peripheral knob
- 4a: first row of apertures
- 4b: second row of apertures
- 5: filtrate vat assembly
- 6: filtrate vat body
- 6': filtrate vat
- 6a: filtrate side of vat body
- 6b: plate side of vat body
- 7: filter plate assembly
- 8: filter plate
- 8a: vat side of filter plate
- 8b: chamber side of filter plate
- 9: filter chamber
- 10: filter press
- 11: filter medium

## Claims

1. A filter grid (1) receivable within a filtrate vat of a filter press, comprising a plate -like grid body (2) having a first side (2a) and an opposing second (2b) side,
wherein the first side (2a) defines a generally planar first surface for supporting a filter element, when in use,
wherein the second side (2b) comprises a plurality of protruding knobs (3) spaced apart from each other for supporting the remaining grid (1) on an associated filtrate vat at a distance therefrom,
wherein the grid body (2) further comprises a plurality of apertures (4) extending between the first side (2a) and the second side (2b), thereby providing fluid communication between the first side (2a) and the second side (2b) through the grid body (2),
**characterized in that** each of the plurality of apertures (4) define an aperture area and an aperture circumference, such that a ratio of the aperture area in millimetres squared to the aperture circumference in millimetres is above 1.3, and
wherein the plurality of apertures (4) occupy at least 35% of a total area of the first side (2a).

2. The filter grid (1) according to claim 1, **characterized in that** the ratio of the aperture area in millimetres squared to the aperture circumference in millimetres is above 1.4, more preferably above 1.5, and most preferably above 1.6.

3. The filter grid (1) according to claim 1 or 2, **characterized in that** the plurality of apertures (4) occupy at least 36% of the total area of the first side (2a), and more preferably at least 37% of the total area of the first side (2a).

4. The filter grid according to any of the preceding claims 1 - 3, **characterized in that** each of the plurality of apertures (4) have an aperture area of no more than 40 mm squared, more preferably no more than 39 millimetres squared, and most preferably no more than 38 millimetres squared.

5. The filtrate grid (1) according to any of the preceding claims 1- 4, **characterized in that** the each of the plurality of apertures (4) are of a hexagonal shape.

6. The filtrate grid (1) according to claim 5, **characterized in that** the plurality of apertures (4) are arranged on the first surface (2a) in a honeycomb layout, comprising a plurality of first rows (4a) and a plurality of second rows (4b), both extending in a longitudinal direction,
wherein said first rows (4a) are arranged parallel, and in a mutually alternating manner with respect said second rows (4b),
wherein the apertures in said first rows (4a) are staggered, in the longitudinal direction of said first and second rows (4a, 4b), with respect to the apertures in said second rows (4b).

7. The filter grid (1) according to any of the preceding claims 5 or 6, **characterized in that** the apertures (4) in the first rows (4a) overlap with those in the second rows (4b) in a direction transverse to the longitudinal direction of the first and second rows.

8. The filter grid (1) according to claim 7, **characterized in that** the apertures (4) in the first rows (4a) do not overlap with those in the second rows (4b) in the longitudinal direction of the first and second rows (4a, 4b).

9. The filtrate grid (1) according to any of the preceding claims 5 - 8, **characterized in that** each of the plurality of apertures (4) have an inscribed diameter of at least 5 mm, and more preferably each of the plurality of apertures (4) have an inscribed diameter of at least 6 mm

10. The filter grid (1) according to any of the preceding claims 1 - 9, **characterized in that** a minimum distance between adjacent apertures (4) is between 2 - 6 mm, more preferably between 3 - 5 mm, and most preferably between 3.5 - 4.5 mm.

11. The filter grid (1) according to any of the preceding claims 1 -10, **characterized in that** non-peripheral knobs (3') of the plurality of protruding knobs (3) are provided on the second side between three apertures (4') immediately adjacent to each other.

12. The filter grid (1) according to claim 11 **characterized in that** such three apertures (4') are circumferentially equally spaced apart from each other about a knob (3') surrounded by said three apertures (4').

13. The filter grid (1) according to claims 11 or 12, **characterized in that** projections of such non-peripheral knobs (3') on the second side (2b) coincide with those of apertures (4') adjacent to such non-peripheral knobs (3').

14. The filter grid according to any of the preceding claims 1 - 13, **characterized in that** the protruding knobs (3) have a circular cross-sectional profile, with a maximum diameter of preferably between 3 - 7 mm, more preferably between 4 - 6 mm, and most preferably between 4,5 - 5,5 mm.

15. A filtrate vat assembly (5), comprising a vat body (6) having:
- a filtrate side (6a) defining a receptacle, thereby forming a filtrate vat (6') for receiving filtrate, and
- a plate side (6b) configured for being supported on a filter plate (6),
**characterized by** the filtrate vat assembly (5) further comprising a filter grid (1) according to any of the preceding claims 1 - 14 received within said filtrate vat.

16. A filter plate assembly (7), comprising a filter plate (8) having:
- a vat side (8a) with a filtrate vat (6') arranged thereon, said filtrate vat (6') being configured for receiving filtrate, and
- a chamber side (8b) forming at least a part of a filter chamber (9),
**characterized by** the filter plate assembly (7) further comprising a filter grid (1) according to any of the preceding claims 1 - 14 received within the filtrate vat (6').

17. A filter press (10), comprising:
a plurality of filter plates (8), wherein at least a filter chamber (9) is formed between adjacent filter plates (8);
a filter medium (11) disposed between said adjacent filter plates (8), such that said filter chamber (9) is delimited in part by the filter medium (11) for separating a slurry to be filtered into a solids cake and liquid filtrate, and
a filtrate vat (6') for receiving filtrate, said filtrate vat (6') being arranged on a side of the filter element (11) opposite to the filter chamber (9),
**characterized by** the filter press further comprising a filter grid (1) according to any of the preceding claims 1 - 14 received within the filtrate vat (6') so as to support the filter element (11) thereon.

## Patentansprüche

1. Filtergitter (1), das in einem Filtratbehälter einer Filterpresse aufnehmbar ist, umfassend einen plattenförmigen Gitterkörper (2) mit einer ersten Seite (2a) und einer gegenüberliegenden zweiten (2b) Seite,
wobei die erste Seite (2a) eine im Allgemeinen plane erste Oberfläche definiert, um bei Verwendung ein Filterelement aufzulagern,
wobei die zweite Seite (2b) eine Mehrzahl von zueinander beabstandeten überstehenden Noppen (3) umfasst, um das übrige Gitter (1) auf einem zugehörigen Filtratbehälter in einem Abstand zu diesem aufzulagern,
wobei der Gitterkörper (2) ferner eine Mehrzahl von Öffnungen (4) umfasst, die sich zwischen der ersten Seite (2a) und der zweiten Seite (2b) erstrecken und dadurch eine strömungstechnische Verbindung zwischen der ersten Seite (2a) und der zweiten Seite (2b) durch den Gitterkörper (2) hindurch bereitstellen,
**gekennzeichnet dadurch, dass** jede der mehreren Öffnungen (4) eine Öffnungsfläche und einen Öffnungsumfang definiert, so dass ein Verhältnis der Öffnungsfläche in Quadratmillimeter zum Öffnungsumfang in Millimeter über 1,3 beträgt, und
wobei die mehreren Öffnungen (4) mindestens 35 % einer Gesamtfläche der ersten Seite (2a) einnehmen.

2. Filtergitter (1) nach Anspruch 1, **gekennzeichnet dadurch, dass** das Verhältnis der Öffnungsfläche in Quadratmillimeter zum Öffnungsumfang in Millimeter über 1,4, bevorzugter über 1,5 und höchstbevorzugt über 1,6 beträgt.

3. Filtergitter (1) nach Anspruch 1 oder 2, **gekennzeichnet dadurch, dass** die mehreren Öffnungen (4) mindestens 36 % der Gesamtfläche der ersten Seite (2a) und bevorzugter mindestens 37 % der Gesamtfläche der ersten Seite (2a) einnehmen.

4. Filtergitter nach einem der vorhergehenden Ansprüche 1 bis 3, **gekennzeichnet dadurch, dass** jede der mehreren Öffnungen (4) eine Öffnungsfläche von höchstens 40 Quadratmillimeter, bevorzugter höchstens 39 Quadratmillimeter und höchstbevorzugt höchstens 38 Quadratmillimeter aufweist.

5. Filtergitter (1) nach einem der vorhergehenden Ansprüche 1 bis 4, **gekennzeichnet dadurch, dass** jede der mehreren Öffnungen (4) von sechseckiger Form ist.

6. Filtergitter (1) nach Anspruch 5, **gekennzeichnet dadurch, dass** die mehreren Öffnungen (4) auf der ersten Oberfläche (2a) in einem Wabenmuster angeordnet sind, das eine Mehrzahl von ersten Reihen (4a) und eine Mehrzahl von zweiten Reihen (4b) aufweist, die sich jeweils in einer Längsrichtung erstrecken,
wobei die ersten Reihen (4a) parallel und gegenseitig abwechselnd in Bezug zu den zweiten Reihen (4b) angeordnet sind,
wobei die Öffnungen in den ersten Reihen (4a) zu den Öffnungen in den zweiten Reihen (4b) in der Längsrichtung der ersten und zweiten Reihen (4a, 4b) versetzt sind.

7. Filtergitter (1) nach einem der vorhergehenden Ansprüche 5 oder 6, **gekennzeichnet dadurch, dass** die Öffnungen (4) in den ersten Reihen (4a) diejenigen in den zweiten Reihen (4b) in einer quer zur Längsrichtung der ersten und zweiten Reihen verlaufenden Richtung überlappen.

8. Filtergitter (1) nach Anspruch 7, **gekennzeichnet dadurch, dass** die Öffnungen (4) in den ersten Reihen (4a) diejenigen in den zweiten Reihen (4b) in der Längsrichtung der ersten und zweiten Reihen (4a, 4b) nicht überlappen.

9. Filtergitter (1) nach einem der vorhergehenden Ansprüche 5 bis 8, **gekennzeichnet dadurch, dass** jede der mehreren Öffnungen (4) einen einbeschriebenen Durchmesser von mindestens 5 mm aufweist und jede der mehreren Öffnungen (4) bevorzugter einen einbeschriebenen Durchmesser von mindestens 6 mm aufweist.

10. Filtergitter (1) nach einem der vorhergehenden Ansprüche 1 bis 9, **gekennzeichnet dadurch, dass** ein Mindestabstand zwischen angrenzenden Öffnungen (4) zwischen 2 - 6 mm, bevorzugter zwischen 3 - 5 mm, und höchstbevorzugt zwischen 3,5 - 4,5 mm beträgt.

11. Filtergitter (1) nach einem der vorhergehenden Ansprüche 1 bis 10, **gekennzeichnet dadurch, dass** nichtperiphere Noppen (3') der mehreren überstehenden Noppen (3) auf der zweiten Seite zwischen drei direkt aneinander angrenzenden Öffnungen (4') vorgesehen sind.

12. Filtergitter (1) nach Anspruch 11, **gekennzeichnet dadurch, dass** solche drei Öffnungen (4') in Umfangsrichtung um eine von diesen drei Öffnungen (4') umgebene Noppe (3') gleichmäßig zueinander beabstandet sind.

13. Filtergitter (1) nach Anspruch 11 oder 12, **gekennzeichnet dadurch, dass** Überstände solcher nichtperipheren Noppen (3') auf der zweiten Seite (2b) mit denjenigen der an solche nichtperipheren Noppen (3') angrenzenden Öffnungen (4') zusammenfallen.

14. Filtergitter nach einem der vorhergehenden Ansprüche 1 bis 13, **gekennzeichnet dadurch, dass** die überstehenden Noppen (3) ein kreisrundes Querschnittsprofil mit einem maximalen Durchmesser von bevorzugt zwischen 3 - 7 mm, bevorzugter zwischen 4 - 6 mm und höchstbevorzugt zwischen 4,5 - 5,5 mm aufweisen.

15. Filtratbehälteranordnung (5) umfassend einen Behälterkörper (6) mit:
- einer Filtratseite (6a), die ein Behältnis definiert und dadurch einen Filtratbehälter (6') zur Aufnahme von Filtrat ausbildet, und
- einer Plattenseite (6b), die dazu ausgelegt ist, auf einer Filterplatte (6) aufgelagert zu werden,
**gekennzeichnet dadurch, dass** die Filterbehälteranordnung (5) ferner ein im Filterbehälter aufgenommenes Filtergitter (1) nach einem der vorhergehenden Ansprüche 1 bis 14 umfasst.

16. Filterplattenanordnung (7) umfassend eine Filterplatte (8) mit:
- einer Behälterseite (8a) mit einem auf ihr angeordneten Filtratbehälter (6'), wobei der Filtratbehälter (6') zur Aufnahme von Filtrat ausgelegt ist, und
- einer Kammerseite (8b), die mindestens einen Teil einer Filterkammer (9) ausbildet,
**gekennzeichnet dadurch, dass** die Filterplattenanordnung (7) ferner ein im Filterbehälter (6') aufgenommenes Filtergitter (1) nach einem der vorhergehenden Ansprüche 1 bis 14 umfasst.

17. Filterpresse (10) umfassend:
eine Mehrzahl von Filterplatten (8), wobei mindestens eine Filterkammer (9) zwischen angrenzenden Filterplatten (8) ausgebildet ist;
ein zwischen angrenzenden Filterplatten (8) angeordnetes Filtermedium (11) dergestalt, dass die Filterkammer (9) teilweise durch das Filtermedium (11) abgegrenzt wird, um eine in einen Feststoffkuchen und ein Flüssigfiltrat zu filternde Suspension abzuscheiden, und
einen Filtratbehälter (6') zur Aufnahme von Filtrat, wobei der Filtratbehälter (6') auf einer der Filterkammer (9) gegenüberliegenden Seite des Filterelements (11) angeordnet ist,
**gekennzeichnet dadurch, dass** die Filterpresse ferner ein im Filterbehälter (6') aufgenommenes Filtergitter (1) nach einem der vorgehenden Ansprüche 1 bis 14 umfasst, um das Filterelement (11) auf diesem aufzulagern.

## Revendications

1. Grille de filtre (1) pouvant être reçue dans un bac de filtrat d'un filtre-presse, comprenant un corps de grille (2) en forme de plaque ayant une première face (2a) et une deuxième (2b) face opposée,
dans laquelle la première face (2a) définit une première surface généralement plane pour loger un élément filtrant, lors de l'utilisation,
dans laquelle la deuxième face (2b) comprend une pluralité de bosses saillantes (3) espacées les unes des autres pour loger la grille restante (1) sur un bac de filtrat associé à une distance de celui-ci,
dans laquelle le corps de grille (2) comprend également une pluralité d'ouvertures (4) s'étendant entre la première face (2a) et la deuxième face (2b) en assurant par-là une communication fluidique entre la première face (2a) et la deuxième face (2b) à travers le corps de grille (2),
**caractérisée en ce que** chacune de la pluralité d'ouvertures (4) définit une surface d'ouverture et une circonférence d'ouverture de telle sorte qu'un rapport de la surface d'ouverture en millimètres carrés à la circonférence d'ouverture en millimètres est supérieur à 1,3, et
dans laquelle la pluralité d'ouvertures (4) occupent au moins 35 % de la surface totale de la première face (2a).

2. Grille de filtre (1) selon la revendication 1, **caractérisée en ce que** le rapport de la surface d'ouverture en millimètres carrés à la circonférence d'ouverture en millimètres est supérieur à 1,4, plus préférablement supérieur à 1,5 et le plus préférablement supérieur à 1,6.

3. Grille de filtre (1) selon la revendication 1 ou 2, **caractérisée en ce que** la pluralité d'ouvertures (4) occupent au moins 36 % de la surface totale de la première face (2a), et plus préférablement au moins 37 % de la surface totale de la première face (2a).

4. Grille de filtre selon l'une des revendications précédentes 1 à 3, **caractérisée en ce que** chacune de la pluralité d'ouvertures (4) a une surface d'ouverture ne dépassant pas 40 mm carrés, plus préférablement ne dépassant pas 39 millimètres carrés, et le plus préférablement ne dépassant pas 38 millimètres carrés.

5. Grille de filtre (1) selon l'une des revendications précédentes 1 à 4, **caractérisée en ce que** chacune de la pluralité d'ouvertures (4) est d'une forme hexagonale.

6. Grille de filtre (1) selon la revendication 5, **caractérisée en ce que** la pluralité d'ouvertures (4) sont disposées sur la première surface (2a) dans un schéma de nids d'abeilles comprenant une pluralité de premières rangées (4a) et une pluralité de deuxièmes rangées (4b) qui s'étendent toutes les deux dans un sens longitudinal,
dans laquelle lesdites premières rangées (4a) sont disposées parallèlement et de manière mutuellement alternée par rapport auxdites deuxièmes rangées (4b),
dans laquelle les ouvertures dans lesdites premières rangées (4a) sont décalées, dans le sens longitudinal desdites premières et deuxièmes rangées (4a, 4b), par rapport aux ouvertures dans lesdites deuxièmes rangées (4b).

7. Grille de filtre (1) selon l'une des revendications précédentes 5 ou 6, **caractérisée en ce que** les ouvertures (4) dans les premières rangées (4a) chevauchent celles dans les deuxièmes rangées (4b) dans un sens transversal au sens longitudinal des premières et deuxièmes rangées.

8. Grille de filtre (1) selon la revendication 7, **caractérisée en ce que** les ouvertures (4) dans les premières rangées (4a) ne chevauchent pas celles dans les deuxièmes rangées (4b) dans le sens longitudinal des premières et deuxièmes rangées (4a, 4b).

9. Grille de filtre (1) selon l'une des revendications précédentes 5 à 8, **caractérisée en ce que** chacune de la pluralité d'ouvertures (4) a un diamètre inscrit d'au moins 5 mm, et plus préférablement chacune de la pluralité d'ouvertures (4) a un diamètre inscrit d'au moins 6 mm.

10. Grille de filtre (1) selon l'une des revendications précédentes 1 à 9, **caractérisée en ce qu'**une distance minimale entre ouvertures adjacentes (4) est comprise entre 2 - 6 mm, plus préférablement entre 3 - 5 mm, et le plus préférablement entre 3,5 - 4,5 mm.

11. Grille de filtre (1) selon l'une des revendications précédentes 1 à 10, **caractérisée en ce que** des bosses non périphériques (3') de la pluralité de bosses saillantes (3) sont prévues sur la deuxième face entre trois ouvertures (4') immédiatement adjacentes les unes des autres.

12. Grille de filtre (1) selon la revendication 11, **caractérisée en ce que** trois telles ouvertures (4') sont circonférentiellement espacées à distances égales les unes des autres autour d'une bosse (3') entourée desdites trois ouvertures (4').

13. Grille de filtre (1) selon la revendication 11 ou 12, **caractérisée en ce que** des saillies de telles bosses non périphériques (3') sur la deuxième face (2b) coïncident avec celles des ouvertures adjacentes (4') à de telles bosses non périphériques (3').

14. Grille de filtre selon l'une des revendications précédentes 1 à 13, **caractérisée en ce que** les bosses saillantes (3) ont un profil de section transversale circulaire avec un diamètre maximal compris préférablement entre 3 - 7 mm, plus préférablement entre 4 - 6 mm, et le plus préférablement entre 4,5 - 5,5 mm.

15. Ensemble de bac de filtrat (5) comprenant un corps de bac (6) ayant :
- un côté filtrat (6a) définissant un récipient et par-là formant un bac de filtrat (6') pour recevoir du filtrat, et
- un côté plaque (6b) configuré pour être logé sur une plaque filtrante (6),
**caractérisé en ce que** l'ensemble de bac de filtrat (5) comprend également une grille de filtre (1) selon l'une des revendications précédentes 1 à 14 reçue dans ledit bac de filtrat.

16. Ensemble de plaque filtrante (7) comprenant une plaque filtrante (8) ayant :
- un côté bac (8a) avec un bac de filtrat (6') y disposé, ledit bac de filtrat (6') étant configuré pour recevoir du filtrat, et
- un côté chambre (8b) formant au moins une partie d'une chambre filtrante (9),
**caractérisé en ce que** l'ensemble de plaque filtrante (7) comprend également une grille de filtre (1) selon l'une des revendications précédentes 1 à 14 reçue dans le bac de filtrat (6').

17. Filtre-presse (10) comprenant :
une pluralité de plaques filtrantes (8) dans laquelle au moins une chambre filtrante (9) est formée entre des plaques filtrantes adjacentes (8);
un média filtrant (11) disposé entre lesdites plaques filtrantes adjacentes (8) de telle sorte que la chambre filtrante (9) est délimitée en partie par le média filtrant (11) pour séparer une suspension à filtrer en un gâteau solide et un filtrat liquide, et
un bac de filtrat (6') pour recevoir du filtrat, ledit bac de filtrat (6') étant disposé d'un côté de l'élément filtrant (11) à l'opposé de la chambre filtrante (9),
**caractérisé** en ce le filtre-presse comprend également une grille de filtre (1) selon l'une des revendications précédentes 1 à 14 reçue dans le bac de filtrat (6') de manière à loger l'élément filtrant (11) sur celui-ci.
